# EUROPEAN PATENT SPECIFICATION

(11) **EP 2 965 901 B1**
(45) Date of publication and mention of the grant of the patent: **16.08.2017**
(21) Application number: 15460028.2
(22) Date of filing: 11.07.2015
(51) Int. Cl.: B32B 1/00, B32B 3/02, B32B 3/04, B32B 3/10, B32B 3/12

(54) **SANDWICH PANEL**
SANDWICHPLATTE
PANNEAU SANDWICH

(30) Priority: 11.07.2014 PL 40882814
(43) Date of publication of application: 13.01.2016
(73) Proprietor: POLITECHNIKA WARSZAWSKA, 00-661 Warszawa (PL)
(72) Inventor: Karczmarzyk, Stanis?aw, 00-679 Warszawa (PL)
(74) Representative: Woznicki, Jerzy

(56) References cited:
- US-A- 1 451 649
- US-A- 3 444 568
- US-A- 4 034 135
- US-A- 4 578 303
- US-A- 5 744 763
- US-A1- 2013 280 469

## Description

The invention relates to a panel of sandwich construction, applicable to the construction of the load-bearing body of land vehicles, especially floors and loading platforms in such vehicles as buses, trams, railway wagons.

There are known cellular boards with the cellular core made of bars, strips or profiles of finished paper, paperboard, plastic materials, wood, metal, or plastic. The cores of cellular boards are usually grid layout with open cells with a quadrangular cross section or another. The shape of the cells depends on the shape and arrangement of the elements forming the core. Bars or strips forming the core can be jointed, glued side by side, or stacked in layers. Cellular boards produced in the form of finished components have the periphery reinforced by internal inserts or by an external frame in which a form of a plate is mounted.

The US 2014147622 patent application discloses a multilayer sandwich composite panel for use as a floor panel in load compartments of vehicles. The panel is composed of a cellular core sandwiched between two outer layers, upper and lower. The lower layer has parallel recesses forming cavities for mounting of the brackets of U-shaped profiles supporting the panel. The outer layers are thermally bonded with the core or with adhesive in a press forming cavity in the lower layer matching the shape of the brackets. During the formation of the pits in the compressed area the core is crushed. Moreover, the panel side edge regions have an open core structure, which requires additional protection and limits its use.

From patent description EP 1727669 is also known a composite element with a sandwich structure, consisting of at least one core layer between two outer layers. All the layers are joined together using casting resin by compression before hardening of the resin. In at least one area of the sandwich structure, particularly at the periphery the core layer located between outer layers is compressed to a minimum thickness. In this area the mechanical properties of the sandwich structure deteriorate because of the squeeze of the core. In order to increase the rigidity and strength of the edge area it is coated with a thermoplastic injection molded plastic.

In the cited solutions edge regions of the assembled elements need to be reinforced or protected through additional resources, making it difficult installation or increased weight of assembled structure. Furthermore, an inadequate sealing of the core layer can influence the deterioration of the assembled structure under the influence of moisture. The aim of the invention is to eliminate these drawbacks. US 5744763 discloses a sandwich panel consisting of two outer layers and a core placed between the outer layers, the core comprising a grid-like partition. A sandwich panel construction, composed of two outer layers and a core placed between the outer layers, upper and lower, in which the core is a grid with four-sided cells formed by lapped bars, according to the invention is characterized in that the lower layer has formed at the periphery side walls divergent to the top and finished with flat flange tightly connected to the upper layer, and the bars forming the grid have a layered structure comprising an odd number of firmly combined component layers, in particular from three to seven, each of which is connected by the narrow surfaces, including the lateral layers, to the upper layer and the lower layer, wherein the outer component layers of the bars have a stiffness greater than the associated component of intermediate layer.

It is advantageous if the bars forming the grid have evenly spaced cut-outs of a width equal to the width of the bars, and the top bars have cut-outs made at the bottom whilst the lower bars have the cut-outs at the top.

It is advantageous if the angle of inclination of the side walls of the lower layer is equal to the slope angle of the inner walls of the frame, in which the structural panel is mounted.

It is advantageous if the side wall with a flat flange have the periphery of a polygonal contour, in particular rectangular, and the rest of the outer layers with the core has the shape of a plane-parallel.

It is also advantageous if the side wall with a flat flange have the periphery of circular outline, and the rest of the outer layers with the core has the shape of a concavo-convex form.

The present invention has a sealed core and convergent to the bottom side walls facilitating assembly of the panel in the frame. Downwardly converging side walls provide a greater stiffness for the structural panel in comparison with the stiffness of the classic sandwich panels and allow weight reduction because there is no need to strengthen the edges by using inserts or other components for transferring edge loads of the plate. Sealing of the core provides moisture resistance and dimensional stability of the panel.

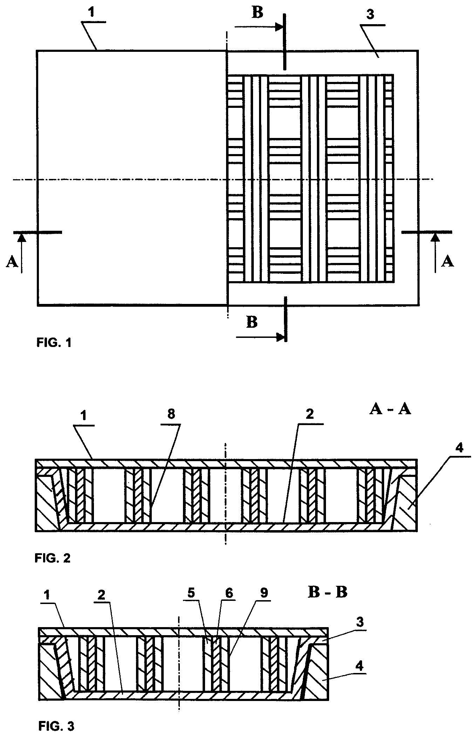

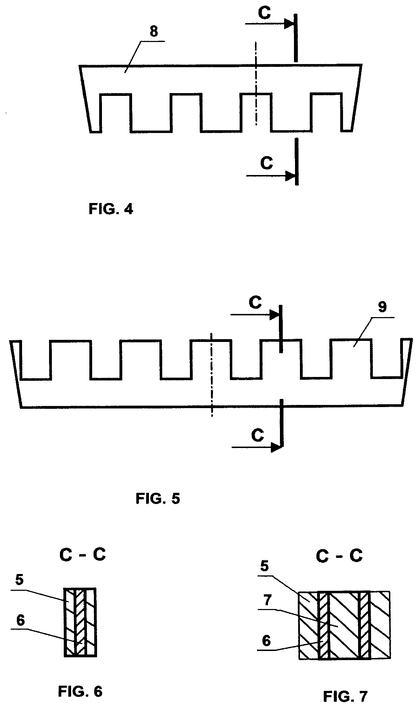

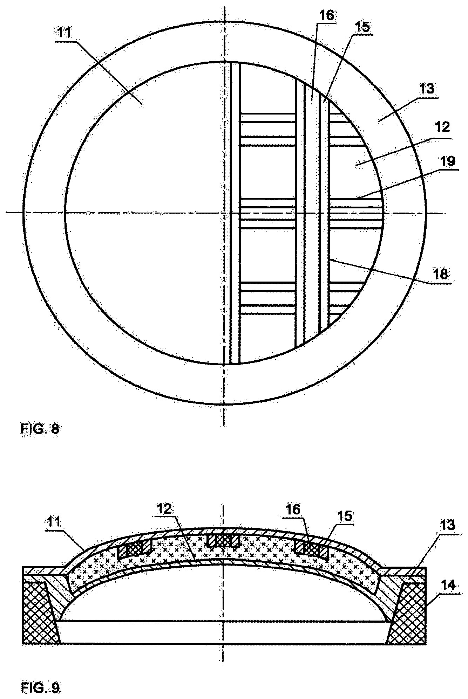

The invention is illustrated in the embodiments in the accompanying drawings, in which fig. 1 shows the panel in top view with removed to half of the upper layer, fig. 2 shows a section A-A of fig. 1, fig. 3 is a section B-B of fig. 1, fig. 4 shows a top bar in a side view, fig. 5 shows the bottom bar in a side view, fig. 6 shows a cross-section C-C of a three-layer bar, fig. 7 shows a cross section C-C of a five-layer bar, fig. 8 shows top view of another panel with removed half of the upper layer, and fig. 9 shows the panel of fig. 8 in cross section.

As shown in fig. 1 - 3, the sandwich panel construction consists of two outer layers and a core placed between the outer layers, the upper 1 and lower 2, wherein the core is quadrilateral grid with cells formed by the lapped bars. The lower layer 2 is formed at the periphery as the wall divergent to the top and finished with a flat flange 3 tightly connected to the upper layer 1. The bars forming the grid have a layered structure containing from three to seven firmly combined layers, each of which is connected by the narrow surfaces, including the lateral layers, with the upper layer 1 and the lower layer 2. The outer component layers 5 have the stiffness greater than the associated component of the intermediate layer 6. The side walls, together with flat flange 3 are at the periphery of a rectangular contour, and the rest the outer layers with the core has the shape of a plane-parallel. The frame 4 has its internal sides adapted to the shape of the divergent to the top side walls of the lower layer 2. The height of the side walls is less than or equal to the inner sides of the frame 4. The panel may also have another polygonal shape adapted to the form of another frame.

As shown in fig. 4, 5, the bars forming the grid structure have evenly spaced cut-outs of a width equal to the width of the bar measured between the lateral surfaces of the outer component layers 5, wherein the top bars 8 have the cut-outs at the bottom and the lower bars 9 have the cut-outs at the top. The shorter sides at the ends of the bars are divergent upwards like the side walls of the lower layer 2. The intersecting bars are jointed after application of the adhesive to the joint. So formed core consists of two groups of bars, the upper 8 and lower 9 which in each group are arranged in parallel, and the bars of one group intersect at right angles to the bars of the second group.

Fig. 6 shows a cross section of the bar made up of three layers components, two outer layers 5 connected to the intermediate layer 6. In the bars consisting of more layers, the component layers are stacked alternately stiff material layer - flexible material layer and so on, and so that the middle layer of the bar was of a flexible material. Component layer located at the center of the bar may have a width different from the other. Fig. 7 shows an example of a bar made up of five layers, wherein the central layer component 7 is wider than the other.

As shown in fig. 8, 9, another panel of sandwich construction consists of two outer circular layers and a core placed between the circular layers, an upper 11 and a lower 12. The lower layer 12 is formed at the periphery as the wall divergent to the top and finished with flat flange 13 tightly connected to the upper layer 11. The bars forming the grid have layered structure containing from three to seven firmly combined component layers, each of which is connected by the narrow surfaces with the upper layer 11 and lower layer 12 together with the side wall. The outer component layers 15 have greater stiffness than the associated intermediate layer 16. The layer component located in the middle of the bar may have a width different from the other. The sidewall and the flat flange 13 have at the perimeter circular contour, and the rest of the outer layers with the core has the shape of a concavo-convex form. The bars forming the grid have evenly spaced cut-outs of a width equal to the width of the bars, the top bars 18 have the cut-outs made at the bottom and the lower bars 19 have cut-outs made at the top. The shorter sides at the ends of the bars are divergent upwards like the side walls of the lower layer 12. The intersecting bars are combined analogously to the bars shown in fig. 4 and fig. 5.

Structural panels of the invention can be adapted to the loads carried by arranging the appropriate number of bars constituting the grid, the use of bars having sufficient strength and stiffness, and appropriate selection of layer thicknesses in the sidewall thickness of the lower layer 2, 12. The direct tight connection of the flange 3, 13 and the upper layer 1, 11 allows us to perform any localized holes for connectors without unsealing the core layer. This made the collar can carry a point load regardless of the thickness of the flange at the site of joint. The collar may also be fastened to the frame 4, 14 by means of shaped fasteners. Use of the component layers of the bars of different stiffness allows to increase the vibration resistance of the panels, thereby increasing their durability. In addition, panel design lets us fill the cells of the core with a foamed material of low density, which may result in improved thermal insulation and acoustic damping.

## Claims

1. A sandwich panel construction, consisting of two outer layers and a core placed between the outer layers, upper and lower, wherein the core is a grid of four-sided cells formed by lapped bars, **characterized in that** the lower layer (2, 12) has formed at the periphery side walls divergent upwards finished flat flange (3, 13) tightly connected to the upper layer (1, 11) and the bars forming the grid have a layered structure comprising an odd number of firmly combined component layers, in particular from three to seven, each of which is connected by the narrow surfaces to the upper layer (1, 11) and the lower layer (2, 12) including its side walls, wherein the outer component layers (5, 15) have a stiffness greater than the associated component of the intermediate layer (6, 16).

2. The panel according to claim 1, wherein the bars forming the grid have evenly spaced cut-outs having a width equal to the width of the bars, and the top bars (8, 18) have that cut-outs at the bottom whilst the lower bars (9, 19) have that cut-outs at the top.

3. The panel according to claim 1, wherein the angle of inclination of the side walls of the lower layer (2, 12) is equal to the slope angle of the inner walls of the frame (4, 14), in which said structural panel is mounted.

4. The panel of claim 1, wherein the side walls with the flat flange (3) have the periphery of a polygonal outline, in particular rectangular, and the rest of the outer layers with the core has the shape of a plane-parallel.

5. The panel according to claim 1, wherein the side walls with a flat flange (13) have at the periphery the circular outline, and the rest of the outer layers with the core has the shape of a concavo-convex form.

## Patentansprüche

1. Sandwich-Platte, bestehend aus dem zwischen der oberen und unteren Außenschicht liegenden Kern mit einer Gitterkonstruktion, bestehend aus von viereckigen, überlappten Stäben gebildeten Zellen, **dadurch gekennzeichnet, dass** die untere Schicht (2, 12) am Rand divergente Seitenwände besitzt und mit einem flachen Flansch (3, 13), der mit der oberen Schicht (1, 11) eng verbunden ist, abgeschlossen ist, und die die Gitterkonstruktion bildenden Stäbe mehrschichtig aufgebaut sind, d.h. sie weisen eine ungerade Zahl an fest miteinander verbundenen Bestandteilsschichten auf, vorteilhaft von drei bis sieben, wobei jede von ihnen an der schmalen Seite mit der oberen (1, 11) und der unteren Schicht (2, 12) einschließlich ihrer Seitenwände verbunden ist, wobei die seitlichen Bestandteilsschichten (5, 15) eine höhere Steifigkeit als die direkt mit ihnen verbundene mittlere Bestandteilsschicht (6, 16) aufweisen.

2. Die Platte nach Anspruch 1, **dadurch gekennzeichnet, dass** die die Gitterkonstruktion bildenden Stäbe über gleichmäßig verteilte Aussparungen, deren Breite der Breite der Stäbe entspricht, verfügen, wobei die Aussparungen bei den oberen Stäben (8, 18) von unten und bei den unteren Stäben (9, 19) von oben ausgeführt worden sind.

3. Die Platte nach Anspruch 1, **dadurch gekennzeichnet, dass** der Neigungswinkel der Seitenwände der unteren Schicht (2, 12) dem Neigungswinkel der Innenwände des Rahmens (4, 14), in dem die Platte angebracht wird, entspricht.

4. Die Platte nach Anspruch 1, **dadurch gekennzeichnet, dass** die Seitenwände samt flachem Flansch (3) am Umfang einen mehreckigen Umriss, vorteilhaft einen rechteckigen Umriss, aufweisen, und der Rest der Außenschichten samt Kern eine plan-parallele Form aufweist.

5. Die Platte nach Anspruch 1, **dadurch gekennzeichnet, dass** die Seitenwände samt flachem Flansch (13) am Umfang einen kreisförmigen Umriss aufweisen, und der Rest der Außenschichten samt Kern eine konkav-konvexe Form aufweist.

## Revendications

1. Le panneaude constructionde type sandwich, composé du noyau établi entre les couchesextérieures, supérieureet inférieure, dans lequel le noyau est une construction en treillis avec les cellules quadrilatérales constituées par les tiges assemblées à recouvrement, caractérisé en ce quela coucheinférieure (2, 12) possède des parois latérales formées sur le bord, divergentes vers le haut terminées par un rebord plat (3, 13) assemblé hermétiquement avec la couchesupérieure (1, 11), et les tigesformant le treillisont la construction à couches, comprennant le nombre impaire des couchessolidaires composantes, notamment compris entre trois et sept, où chaque côté étroit d'une couche est lié avec la couchesupérieure (1, 11) et avec la coucheinférieure (2, 12) y compris ses côtés latéraux, cependant les couches latérales composantes (5, 15) ont une rigidité plus grande que celle de la couche intermédiaire composante qui est unie avec elles (6, 16).

2. Le panneau, selon la revendication 1, **caractérisé en ce que** les tigesformant le treillisont des entailles réparties régulièrement dont la largeur est égale à celle des tiges, cependant les tigessupérieures (8, 18) ont des entailles allant du haut vers le bas, et les tigesinférieures (9, 19) ont des entailles allant du bas vers le haut.

3. Le panneau, selon la revendication 1, **caractérisé en ce que** l'angle d'inclinaison des parois latérales de la coucheinférieure (2, 12) est égal à l'angle d'inclinaison des parois intérieures d'encadrement (4, 14), dans lequel est monté le panneaude construction.

4. Le panneau, selon la revendication 1, **caractérisé en ce que** les parois latérales et le rebord plat (3) ont un contour polygonal sur le périmètre, notamment rectangulaire, et d'autres couchesextérieureset le noyau ont une forme plate parallèle.

5. Le panneau, selon la revendication 1, **caractérisé en ce que** les parois latérales et le rebord plat (13) ont un contour circulaire sur le périmètre, et d'autres couches extérieures et le noyau ont une forme concave-convexe.
